# EUROPEAN PATENT APPLICATION

(11) **EP 4 249 441 A1**
(43) Date of publication of application: **27.09.2023**
(21) Application number: 22163120.3
(22) Date of filing: 20.03.2022
(51) Int. Cl.: C02F 1/467

(54) **IN PIPE DRINKING WATER GENERATOR WITH MINIMAL INFRASTRUCTURE DEPENDENCE**

(71) Applicant: Patrissi, Donato, 10137 Torino (IT)
(72) Inventor: Patrissi, Donato, 10137 Torino (IT)
(74) Representative: Schmauder & Partner AG Patent- & Markenanwälte VSP

(57) **Abstract**

The invention enables low cost and small-scale automation of drinking water chlorination and supply, based on starting materials, equipment installations and energy sources readily available in remote locations, even under poor infrastructure conditions.

The invention overcomes some of the logistical, technical and economic hindering factors for accessing safe drinking water in remote, underdeveloped communities.

By using readily available chloride salts and solar energy, in a method of solar powered electrochemical chlorination, chlorine gas is generated on the surface of a cathode immersed in the aqueous solution to be treated. This first step and the subsequent hydrolysis to hypochlorite anions occurs in a production tank integrated within a closed piping system, connected to a storage tank and the potable water distribution system, which is protected from air and light exposure. Over a wireless communication line, the system status data is transmitted to a central processor control unit, providing the capability to receive alerts on maintenance needs and, more generally, the output from peripheral sensors, such as consumption data, thus enabling smart dosing of the *in situ* produced disinfectant into the drinking water.

## Description

### Field of invention

The present invention generally refers to a drinking water chlorinator system for rural areas and humanitarian contexts of the Global South. More particularly, only kitchen salt and solar power are needed to operate a continuous water disinfection in a pipe delivery system. The invention therefore solves issues with potable water supply at low cost, avoiding dependence on urban infrastructures and on the purchasing and handling of hazardous, unstable chemicals.

### Background of the invention

The purpose and application context is all about a low-cost, smart water treatment methodology, which is applicable to rural areas, refugee camps, underdeveloped regions and the like. Clean water supply is vital for public health and economic stability. Society is facing rising demands of drinking water. Numerous conventional water treatment technologies are available in rural areas of developing countries, which tend to adopt simple and rudimentary techniques as reviewed in literature (1). These include boiling, filtration, sedimentation and solar irradiation. In remote, rural areas lacking urban infrastructures and reliable energy supply, traditional methods may be impracticable and energy wasting, particularly where wood is scarce and no other heating options are available.

Chlorine is the most widely used primary disinfectant for water treatment providing safe drinking quality. It is often used because of its unique advantage of providing residual disinfection in the water distribution system. Contamination often occurs between the point of delivery (community fountains in rural contexts) and point of use (household). The faecal recontamination contributes to the 2/3 (2) up to 75% of water samples collected at household level (3).

In spite of chlorine's advantages, there are problematic issues associated with it. because it is not available everywhere, especially in conflict zones. It requires proper storage and transport to avoid depletion and the concentration in water depends on different water quality parameters.

In the common procedures chlorine must be in a reactive form to develop its disinfectant action. Chlorine gas (Cl₂) reacts with water forming hypochlorous acid Cl₂+H₂O↔HClO+HCl , which is a weak acid that dissociates into hydrogen ion, H⁺ and hypochlorite ion OCl⁻ . Given that the ion concentrations are pH dependent, such reactive species may equally be obtained by directly dissolving hypochlorite salts (sodium or calcium hypochlorite). All these methods have serious drawbacks because they require transport, storage, and handling of hazardous toxic and corrosive, unstable chemicals. Chlorine based water treatment for drinking water supply must therefore be carried out by specialized staff, and very effective control and alarm systems are necessary. For this reason, in many rural networks of the Global South water is left untreated.

Also, especially in remote areas the issues of maintenance and operability of water networks arises. For instance, according to the Ethiopian OneWASH National Programme, 11 % of water systems were not functional in 2020 one year after construction. Water utilities, NGOs and International organisation have the need to supervise their infrastructures and technology implementation and to make sure they are operational. In view of all the above there is a need for innovations in the water disinfection sector that overcome the need of importing chemicals and thus provide sustainability in the long term.

Our invention addresses these issues with a new combination of installations and natural energy source that electrochemically generates chlorine in situ, in the immediate temporal and physical proximity of the water treatment operation, even in remote underdeveloped rural areas. Importantly, by including remote monitoring and intervention, the new method allows to run the supply system for days without human operators on site.

### Summary of the Invention

The present invention solves issues in the way of increased access to safe drinking water in low-income urban communities, enabled by automated decentralized water treatment installations. The invention consists of an electrochemical disinfection method in which reactive chemical oxidants are generated *in situ* from stable precursors within a drinking water pipe system, using chloride salts and solar energy as key elements, their dosage being determined and controlled based on in-line sensor data

According to one aspect of the invention (claim 1), there is an electrochemical disinfection process of continuously chlorinating drinking water in a pipe system, simply using readily available chloride salts and solar energy, while monitoring the supply system status over a remote control unit, receiving liquid flow related data. This allows the system to be independent from the energy supply of urban infrastructures and from the procurement of hazardous chemicals, which is of advantage especially in rural and remote areas.

The production of disinfectant solution (hypochlorite preparation) is based on the electrochlorination of water with solid chloride salts (claim 2). Disinfectants are favourably generated from chlorine-based oxidants due to their relatively low oxidation potentials and the prevalence of chloride precursors in many sources. Cl₂ is electrochemically generated on the electrode surface and hydrolyzes into both hydrochloric acid and the primary oxidant, hypochlorous acid. When treating wastewater in rural areas, because of the relatively high chloride concentration in urine and faeces, chloride ion supplementation may not be needed. However, in most circumstances, the influent concentration of chloride in drinking water treatment is insufficient to produce reactive chlorine without addition from an external source.

Most conveniently the disinfectant can be produced with stable, highly soluble table salt, *i.e.* sodium chloride (claim 3).

The reaction producing chlorine from chloride anions occurs favourably in water, considering the standard oxidation potential of -1.4V. Via this gaseous precursor species, the disinfectant solution is produced by passing electric current for 1 or more hours generating an active chlorine concentration between 1 and 10 g/l, preferably 5g/l (claim 4).

Taking into account the inherent light sensitivity and chemical instability of chlorine and its reactive derivatives, the disinfectant species are preferably prepared within a closed system, valve equipped, interconnecting supply and mixing tanks, production and storage tanks with flow pipes, protected from air exposure and light (claim 5). The oxidant precursor chloride salt is kept dissolved in a dedicated storage tank, (claim 6) and flows on demand into a disinfectant production chamber equipped with a solar energy cell powered electrochlorination device (claim 7). A data processing control unit provides the capability to dose the in situ produced disinfectant into the drinking water pipe system through a dosing valve (claim 8). A flow meter sensor delivers data about liquid volume withdrawals from the pipe system (claim 9), such as dispensed drinking water, typically collected by end users filling high capacity jerrycans. This data is important for calculating the disinfectant dose that dilutes into the dispensed drinking water volume, where its sanitizing action continues while transported and stored before consumption. Based on sensor detected data (for example a predetermined threshold flow volume), the processing control unit is capable to send an alert signal to a distant location, such as the request for human intervention (claim 10).

According to an advantageous embodiment of the invention the communication line can be established over long distance, well distinct from the drinking water dispensing point (claim 11), preferably over the air with a mobile phone connection (claim 12).

Advantageously, the dosing of sodium hypochlorite is made inline based on water flow and on water quality parameters automatically detected in order to have a concentration of Free Residual Chlorine of at least 0.5 mg/l at the point of delivery (claim 13).

In a preferred embodiment of the invention the system transmits actionable diagnostic data about the system status to the central control unit, such as the need for maintenance, part replacement and the like (claim 14). When monitoring electrochemical disinfection systems across locally specific operating conditions and customized system configurations, it is in fact critical to quantify and record both the disinfection efficacy and the physical parameters characterizing the operating conditions.

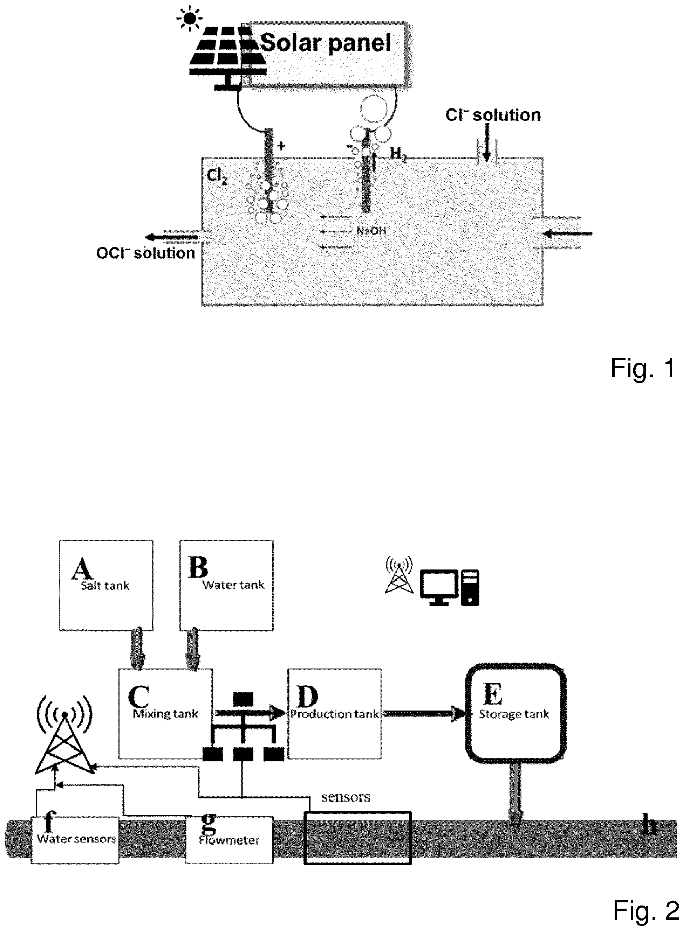

The above mentioned and other features and objects of this invention and the manner of achieving them will become more apparent and the invention itself will be better understood by reference to the following description of embodiments of this invention taken in conjunction with the accompanying drawings, as shown in Fig. 1.

### Brief description of the drawings

The above mentioned and other features and objects of this invention and the manner of achieving them will become more apparent and this invention itself will be better understood by reference to the following description of various embodiments of this invention taken in conjunction with the accompanying drawings, wherein:
- Fig. 1: is a schematic representation of a chlorinator that works with solar energy, and
- Fig. 2: is a schematic representation of a water treatment system for performing inline electrochlorination with locally produced sodium hypochlorite from table salt. Sanitized water feeds into a pipe distribution system of sanitized water for distant access points.
A: Salt tank (chloride salt solution)
B: Water tank
C: Mixing tank
D: Production tank equipped with solar powered electrolyzer cell
E: Storage tank
f: Water sensor
g: Flow meter
h: Water distribution pipe net

### Detailed description of the invention

The apparatus shown in Fig. 1 comprises an electronic operated chlorinator that works with solar energy and table salt only. A mixer tank mixes water and table salt and the solution is delivered to the production tank, where the electrochlorinator device is located. After 2 hours, sodium hypochlorite is produced at a concentration of 5 g/l. At such a concentration, 1 litre of this solution is enough to treat 3,300 litres of drinking water. As shown in Fig. 2, the disinfectant solution is delivered to the storage tank and a new production can start. Meanwhile, based on the data collected by the water sensors and the flowmeter (a Hall effect water flow sensor is used, but others can be used as well), sodium hypochlorite is dosed in the pipe (a peristaltic pump in combination with a Venturi injector pipe are used, but other alternatives are also possible).

### Examples

A pilot system has been installed and variably reconfigured while optimizing the performance of water treatment operations in Abella, a rural village of 1000 people 30 km South of Hawassa (Ethiopia). In one configuration of the system, the production of sodium hypochlorite with an electrochlorinator unit and the automatic dosing were made separately. An operator was producing sodium hypochlorite and then inserting it in the storage tank. Then the disinfectant solution was dosed in the pipe based on the flowmeter data. A WATA-Standard electrolyzer (from WATALUX SA, c/o Antenna Foundation, Geneva - Switzerland) was used. The unit produces 2 litres of disinfectant solution in 2 hours, able to treat about 6,650 litres of water. The WATA^{™} range of devices make it possible to treat between 2 m3 and 240 m3 of water during each production cycle. Each model can be tailored to the specific needs of its users. An Arduino Uno board, an open-source microcontroller board based on the Microchip ATmega328P microcontroller, was used in setting up the central processing unit automated disinfection control unit.

Another pilot was installed in the Wenago Health Centre, 16 km south of Dila (Ethiopia). In this system, the salt water solution was manually prepared and then inserted in the production tank.

The installation is built to provide safe drinking water until the point of use in rural context and humanitarian aid missions. It connects the inlet pipe and the outlet pipe downstream of a reservoir or a storage tank and connects it to a source of electricity (not necessarily limited to solar panel, but conveniently also running on a solar panel alone). The operator fills the salt storage tank once every day or every two days depending on water consumption. The salt water solution is prepared at salt saturation and the electrochlorinator is started. After 2 hours, sodium hypochlorite at a concentration of 5 g/l is produced and moved to the storage tank. This sets the system ready for a new production start. Simultaneously, continuous disinfection is performed by inserting the right amount of sodium hypochlorite depending on the flow using a peristaltic pump.

By doing so, a supervisor or water utility operator can dedicate his worktime to other tasks while the water is automatically disinfected, and the user population obtains access to safe water with a concentration of Free Residual Chlorine (FRC) of around 0.5 mg/l (see example data Table 1)

At the same time, data regarding the status of the system and on quality and quantity of the produced, disinfected water can be accessed on the online dashboard from the headquarters or field offices of the implementing organization.

**Table 1: Measured values of Free Residual Chlorine build-up over time, at the household level, as a result of electrochlorination**

| 15-19.11 | | FRC [mg/L] Free Residual Chlorine | | | | |
|---|---|---|---|---|---|---|
| Time | ID | 1 | 2 | avg | T stored [hrs] | Filling status jerrycan (%) |
| 16:00 | HH5 | 0 | 0 | 0 | 6 | 0 |
| 15:00 | HHF | 0 | | 0 | 6 | 10 |
| 15:05 | HHG | 0 | 0 | 0 | 6 | 20 |
| 16:07 | HH6 | 0 | 0 | 0 | 24 | 100 |
| 10:45 | HH1 | 0 | 0 | 0 | 24 | 80 |
| 10:50 | HH2 | 0 | | 0 | 24 | 10 |
| 15:30 | HH5 | 0 | 0 | 0 | 30 | 5 |
| 15:45 | HH7 | 0 | 0 | 0 | 30 | 5 |
| 15:50 | HH8 | 0 | 0 | 0 | 30 | 50 |
| 15:35 | WP1 | 0 | 0,1 | 0,05 | 0 | 100 |
| 16:20 | HH11 | 0 | 0,1 | 0,05 | 30 | 60 |
| 16:15 | HH10 | 0,1 | 0,1 | 0,1 | 6 | 30 |
| 11:45 | HH7 | 0,1 | | 0,1 | 18 | 10 |
| 15:25 | HH4 | 0,2 | 0,1 | 0,15 | 6 | 80 |
| 14:35 | HHA | 0,2 | 0,1 | 0,15 | 6 | 90 |
| 16:05 | HH6 | 0,1 | 0,2 | 0,15 | 6 | 10 |
| 15:20 | HH3 | 0,1 | 0,2 | 0,15 | 24 | 70 |
| 10:00 | HHG | 0,1 | 0,2 | 0,15 | 24 | 100 |
| 15:50 | HH4 | 0,1 | 0,2 | 0,15 | 30 | 20 |
| 17:00 | HH15 | 0,2 | 0,2 | 0,2 | 6 | 50 |
| 11:15 | HH5 | 0,2 | | 0,2 | 18 | 50 |
| 11:50 | HH8 | 0,1 | 0,3 | 0,2 | 18 | 100 |
| 14:50 | HHD | 0,2 | 0,2 | 0,2 | 24 | 40 |
| 15:50 | HH2 | 0,2 | 0,2 | 0,2 | 24 | 10 |
| 15:20 | HHH | 0,3 | 0,1 | 0,2 | 30 | 20 |
| 15:10 | WP3 | 0,3 | 0,2 | 0,25 | 0 | 100 |
| 15:20 | HH1 | 0,2 | 0,3 | 0,25 | 6 | 100 |
| 14:55 | HHE | 0,2 | 0,3 | 0,25 | 6 | 50 |
| 10:00 | HHB | 0,4 | 0,1 | 0,25 | 24 | 100 |
| 11:10 | HH4 | 0,3 | | 0,3 | 18 | 20 |
| 11:20 | HH6 | 0,3 | | 0,3 | 18 | 100 |
| 15:45 | HHB | 0,1 | 0,5 | 0,3 | 30 | 100 |
| 16:10 | HH7 | 0,2 | 0,4 | 0,3 | 6 | 100 |
| 15:50 | HH8 | 0,2 | 0,4 | 0,3 | 6 | 100 |
| 16:45 | HH13 | 0,4 | 0,2 | 0,3 | 6 | 90 |
| 15:40 | HH3 | 0,5 | 0,2 | 0,35 | 6 | 30 |
| 16:50 | HH14 | 0,3 | 0,4 | 0,35 | 6 | 50 |
| 15:00 | HH1 | 0,4 | 0,3 | 0,35 | 24 | 50 |
| 16:35 | WP1 | 0,3 | 0,5 | 0,4 | 0 | 100 |
| 16:30 | WP1 | 0,5 | 0,3 | 0,4 | 0 | 100 |
| 15:30 | HH2 | 0,4 | 0,4 | 0,4 | 6 | 40 |
| 15:10 | HH2 | 0,4 | 0,4 | 0,4 | 6 | 80 |
| 14:40 | HHB | 0,4 | 0,4 | 0,4 | 6 | 100 |
| 11:00 | HH3 | 0,4 | 0,4 | 0,4 | 18 | 100 |
| 16:00 | HH9 | 0,4 | 0,5 | 0,45 | 6 | 100 |
| 11:35 | WP1-B | 0,6 | 0,4 | 0,5 | 0 | 100 |
| 14:40 | WP2 | 0,5 | 0,5 | 0,5 | 0 | 100 |
| 15:55 | HH5/WP1B | 0,4 | 0,6 | 0,5 | 0 | 100 |
| 16:20 | HH8 | 0,4 | 0,6 | 0,5 | 6 | 100 |
| 14:45 | HHC | 0,5 | | 0,5 | 6 | 20 |
| 15:40 | HH6 | 0,6 | 0,4 | 0,5 | 24 | 80 |
| 15:45 | HHG | 0,4 | 0,6 | 0,5 | 30 | 100 |
| 11:30 | WP1-G | 0,5 | 0,6 | 0,55 | 0 | 100 |
| 10:30 | WP1 | 0,7 | 0,4 | 0,55 | 0 | 100 |
| 16:30 | HH12 | 0,6 | 0,7 | 0,65 | 6 | 100 |

### REFERENCES

1. Charuasia ST, A.K. A review on traditional water purification methods used in rural areas. Indian Journal of Environmental Protection. 2016;36:43-48.
2. Rufener S, Mausezahl D, Mosler HJ, Weingartner R. Quality of drinking-water at source and point-of-consumption--drinking cup as a high potential recontamination risk: a field study in Bolivia. J Health Popul Nutr. 2010;28:34-41.
3. Patrissi DM, R.; Ambelu, A.; Molnar, P.; Valsangiacomo, C.: Drinking water access, quality and handling in the Hawassa Basin, Ethiopia. in 42nd WEDC International Conference: Equitable and Sustainable Wash Services: Future Challenges in a Rapidly Changing World. Online Conference2021.

## Claims

1. An electrochemical disinfection method in which
a. reactive chemical oxidants are generated *in situ* from stable precursors within a drinking water pipe system;
b. one or more chloride salts and solar energy are used as key elements of water electrochlorination;
c. the dosage of key elements (or impact on the process outcome) is controlled with in-line sensor data
d. the resulting drinking water is supplied to access points (*i.e.* distribution points) within a closed pipe system
e. consumption data is measured in real time and transmitted to a remote processor unit controlling the liquid flow of the pipe system

2. The method of claim 1, wherein the stable precursors are water soluble chloride salts

3. The method of claim 2, wherein the production of disinfectant solution generates sodium hypochlorite through electrochlorination of water with sodium chloride (table salt)

4. The method of claim 1, wherein the disinfectant solution is produced by passing electric current for 1 or more hours generating an active chlorine concentration between 1 and 10 g/l, preferably 5g/l

5. The method of claim 2, wherein the electrochlorination is carried out *in situ* within a closed, valve equipped system of supply tanks, mixing tanks, production and storage tanks interconnected with flow pipes, protected from air exposure and light (Fig. 1)

6. The method of claim 2, wherein the oxidant precursor chloride salt is kept in aqueous solution in a dedicated storage tank, optionally connected with a mixing chamber and a water supply source

7. The method of claim 2, wherein the oxidant precursor chloride salt flows into a disinfectant solution production tank equipped with an electrochlorination device, including an electrolytic cell powered by solar energy

8. The method of claim 2, wherein the disinfectant solution is dosed into the drinking water pipe system through a dosing valve operated by a data processing control unit

9. The method of claim 8, wherein a flow meter sensor provides data about liquid volume withdrawals from the pipe system (e.g. dispensed drinking water)

10. The method of claim 8, wherein, based on sensor detected data (for example a predetermined threshold flow volume), the processing control unit is capable to signal an alert

11. The method of claim 10, wherein the processing control unit is capable to establish a communication line with a remote location, at a distance >1 km from the drinking water dispensing point

12. The method of claim 11, wherein the communication line is a mobile phone connection

13. The method of claim 8, wherein the dosing of sodium hypochlorite is made inline based on water flow and on water quality parameters automatically detected in order to have a concentration of Free Residual Chlorine of at least 0.5 mg/l at the point of delivery

14. The method of claim 10, wherein the system transmits actionable diagnostic data about the system status to the central control unit (e.g. the need for maintenance, part replacement and the like
